# EUROPEAN PATENT SPECIFICATION

(11) **EP 3 650 362 B1**
(45) Date of publication and mention of the grant of the patent: **09.03.2022**
(21) Application number: 19207917.6
(22) Date of filing: 08.11.2019
(51) Int. Cl.: B65B 59/00, B65B 59/04, B65B 65/02, B65B 41/10, B65B 41/16, B65B 65/00

(54) **MACHINE FOR THE PRODUCTION OF SMOKING ARTICLES**
VORRICHTUNG ZUR HERSTELLUNG VON RAUCHARTIKELN
MACHINE DE PRODUCTION D'ARTICLES À FUMER

(30) Priority: 12.11.2018 IT 201800010246
(43) Date of publication of application: 13.05.2020
(60) Divisional application: 22153285.6
(73) Proprietor: G.D S.p.A., 40133 Bologna (IT)
(72) Inventor: SGRIGNUOLI, Vittorio, 40133 BOLOGNA (IT); SARTONI, Massimo, 40133 BOLOGNA (IT); FEDERICI, Luca, deceased (IT)
(74) Representative: Bianciardi, Ezio

(56) References cited:
- EP-A1- 1 533 232
- WO-A1-2005/035414
- WO-A1-2020/089793
- US-A- 4 231 560
- US-A1- 2010 326 796

## Description

This invention relates to a machine for packaging articles, in particular smoking articles, comprising a plurality of operating elements for transferring and/or processing material for forming and/or packaging smoking articles, wherein at least a part of the operating elements consists of rollers mounted coaxially to each other and/or on axes parallel to each other.

The invention also relates to a machine for packaging hygiene articles, in particular absorbent articles such as, for example, nappies, a machine for making containers made of multilayer material for liquids or powders, in particular brik packs or capsules or the like, and a machine for packaging food products, in particular sweets or chocolates, using the same operating elements, in particular the same rollers.

It is known, for example in the tobacco sector, that webs are fed continuously by means of trains of rollers defining a feed path. In the specific case of a machine for making filters, the rollers have a particular structure and function when considering a stretching station positioned upstream and/or downstream of the processing station with plasticizing material.

In these prior art machines, the rollers are mounted on a vertical wall forming part of the base of the machine and the rollers are driven by respective electric motors located on the opposite side of the wall. Such a solution is disclosed for example in EP 1533232 A1 which discloses a packaging machine with a plurality of operating means for transferring and/or processing packaging material, at least some of the operating means being embodied by rollers rotatable about respective axes mounted on axes which are parallel to each other.

These machines have the problem of being difficult to maintain due to the need to operate on motors positioned on the rear side of the wall, as well as enclosed inside the frame of the machine, and they also require complex changeover operations on account of the need to prepare replacement idle rollers which must be coupled each time to the respective motors. Moreover, these motors, positioned on the rear side of the wall, occupy space which could be dedicated to other purposes, for example to one or more electric control units, or which could be saved to reduce the dimensions of the machine.

In this context, the basic technical purpose of the invention is to provide a packaging device for smoking articles which overcomes the above-mentioned disadvantages of the prior art.

More specifically, the aim of the invention is to provide a machine for packaging smoking articles which is constructionally simple and easy to maintain.

Another aim of the invention is to provide a machine for making smokers' articles which is extremely simple for size changeover.

The technical purpose indicated and the aim specified are substantially achieved by a machine for packaging smoking articles comprising the technical features set out in claims 1 to 14.

The invention also relates to a machine for packaging sanitary articles, in particular absorbent articles, a machine for making containers made of multilayer material for liquids and a machine for packaging food products, in particular small products such as chocolates, sweets or the like, comprising the technical features described in claims 15 to 17, respectively.

The invention is described below with reference to the accompanying drawings, which illustrate a non-limiting embodiment of it, in which:

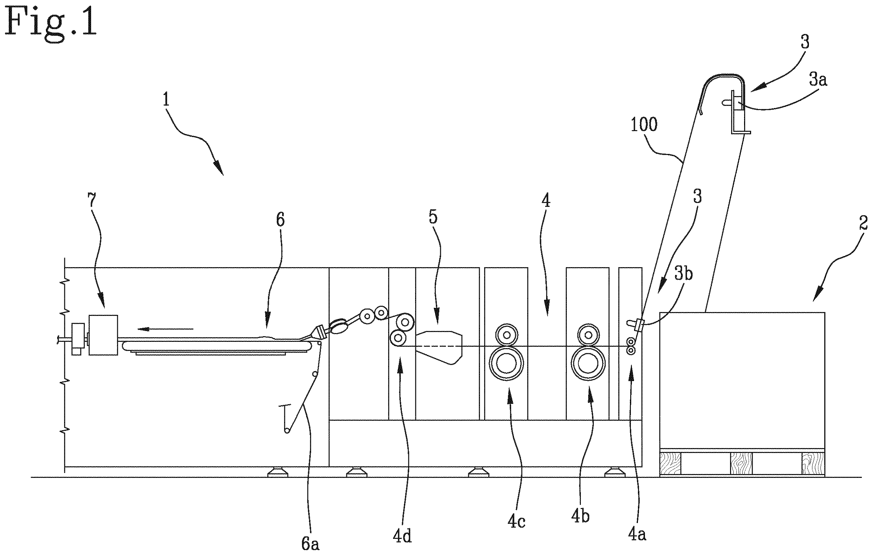

- Figure 1 represents a schematic view of a machine according to this invention;
- Figure 2 shows an operating portion of the machine of Figure 1 in a first configuration, corresponding to an operating condition;
- Figure 3 shows the portion of Figure 2 in a second configuration, corresponding to a non-operating condition;
- Figure 4 is a cross section, along a vertical plane, of the portion of Figure 2 with some parts removed;
- Figure 5 is a perspective cross section view, along a vertical plane, of the portion of Figure 2 with some parts removed;
- Figure 6 shows an enlargement of a first portion of the view of Figure 4;
- Figure 7 is a perspective cross section view of the portion of Figure 6;
- Figure 8 shows an enlargement of a second portion of the view of Figure 4;
- Figure 9 is a perspective cross section view of the portion of Figure 8.

With reference to the accompanying drawings, the numeral 1 denotes in its entirety a machine for the tobacco industry, in particular a machine for processing a filter material starting from a bale of filter material for obtaining a continuous filter rod, suitable for the subsequent separation into filtering segments.

The machine 1, the layout of which is of known type, comprises a station 2 for feeding a web 100 of filter material (acetate) in the form of a compressed bale, at least one successive widening station 3 equipped with widening nozzles 3a, 3b in succession configured for expanding in width the web, a subsequent stretching station 4 equipped with two pre-tensioning rollers 4a, two first tensioning rollers 4b and two second tensioning rollers 4c (the number of rollers of the stretching station 4 could, however, be different), of a subsequent processing station 5 with a plasticizing material if necessary followed by two relaxing rollers 4d, a subsequent station 6 for forming a continuous rod by wrapping with a paper web 6a and a station 7 for cutting the rod in segments.

In particular, the invention relates to operating elements of the machine 1 designed for transferring and/or processing the web 100, and specifically the pairs of rollers 4a, 4b, 4c, 4d which in the case of the machine described are designed for feeding the web 100 and for its processing. For this purpose, each pair of tensioning rollers 4b, 4c (or at least one of the two) is usually defined by a motor-driven roller (which in the accompanying drawings is defined as an upper roller but which could have a different arrangement, for example lower or lateral) with a metallic cylindrical mantle and an idle roller with rubberized mantle (which in the accompanying drawings is defined as lower roller but which could have a different arrangement, for example upper or lateral). Usually, the motor-driven roller is equipped with corrugations along the axis of rotation of the roller to determine, simultaneously with the flattening of the web between the rollers, a separation of the fibres of the web in a direction transversal to the feed direction. According to further variants, the lower rollers may also be made of metal, smooth or provided with respective corrugations.

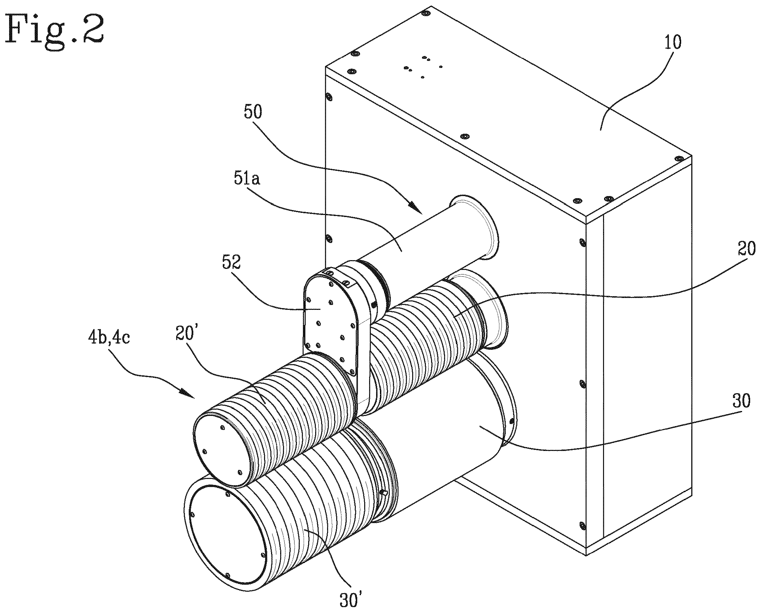

Figures 2 to 9 show technical details of the rollers 4a (or in a similar manner, the rollers 4b) made in accordance with an embodiment of the invention. In particular, Figures 2 to 9 refer to a double line machine, that is to say, configured to operate simultaneously on two webs advancing along paths side by side (or superposed or in any case positioned in mutual vicinity).

As shown in Figure 2, two pairs of rollers 4a, in particular a first pair of rollers, or upper rollers, 20, 20' and a second pair of rollers, or lower rollers, 30, 30', are applied to a substantially vertical wall 10 of the machine 1, forming part of the base of the machine 1. As indicated above, according to an embodiment, the upper rollers 20, 20' are motor-driven and equipped with a metallic cylindrical mantle, preferably equipped at least partly with corrugations along the axis of rotation, whilst the lower rollers are preferably idle and equipped with a resilient cylindrical mantle, in particular rubberized.

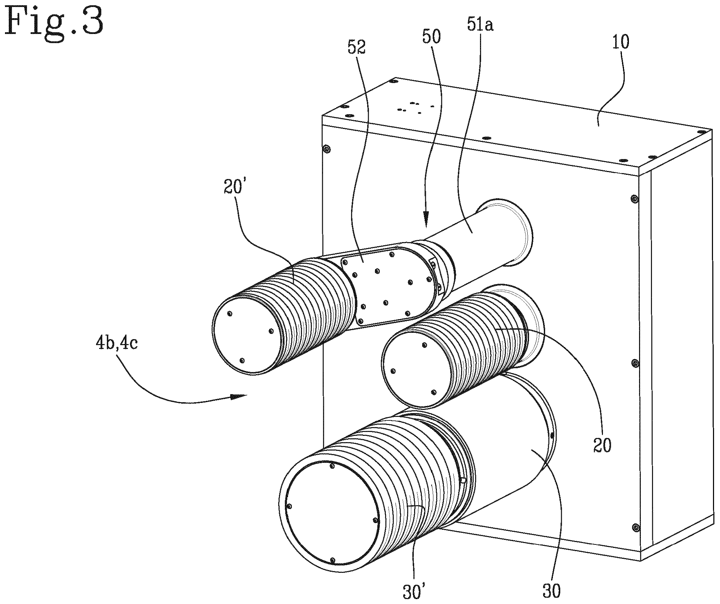

Figure 2 shows the rollers 20, 20', 30, 30' in an operating configuration (with the web not illustrated for clarity of description) whilst Figure 3 shows a non-operating condition, suitable for size changeover and which will be described below.

In more detail, the two upper rollers 20, 20' are positioned coaxially (in the operating configuration of Figure 2) and in particular with their axes of rotation perpendicular to the vertical surface defined by the wall 10. Similarly, the two lower rollers 30, 30' are positioned coaxially with each other and in particular with their axes of rotation perpendicular to the vertical surface defined by the wall 10.

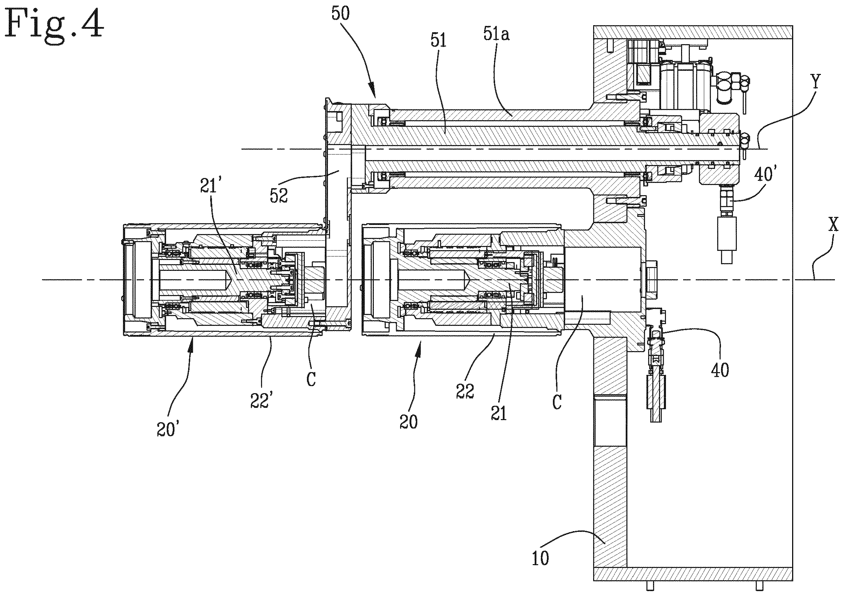

Figures 4 to 9 illustrate in detail the internal structure of the upper rollers 20, 20', to which the inventive concept of the invention applies in particular.

Each upper roller 20, 20' comprises a central support 21, 21', in the form of a shaft and positioned to rotate about a respective axis "X", and an outer cylindrical mantle 22, 22' (equipped at least partly with corrugations) which is also rotatable about the axis of rotation "X" in an integral fashion with the respective shaft 21, 21'.

Between the shaft 21, 21' and the mantle 22, 22' there is an internal compartment 23, 23' inside of which an electric motor 24, 24' is advantageously at least partially positioned, configured for rotating the mantle 22, 22' about the respective axis "X".

Each electric motor 24, 24' comprises an inner rotor 24a, 24a' closer to the axis of rotation "X" and fitted on the central shaft 21, 21', in particular integral with it or fixed to it in a rigid fashion, and an outer stator 24b, 24b' which surrounds the rotor 24a, 24a' and is positioned in a fixed position in accordance with the methods described below. The electric motor 24, 24' is preferably a brushless motor (with permanent magnets).

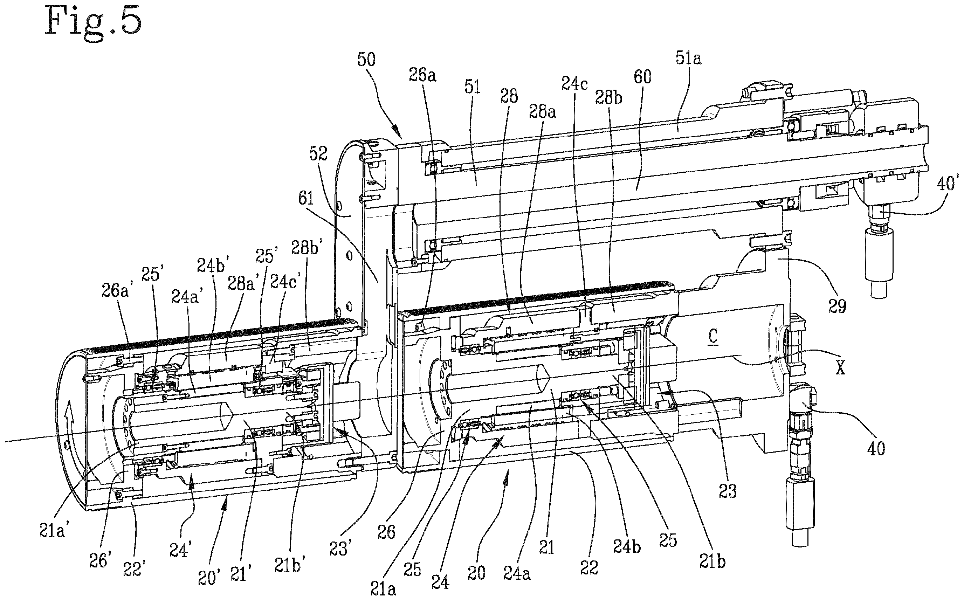

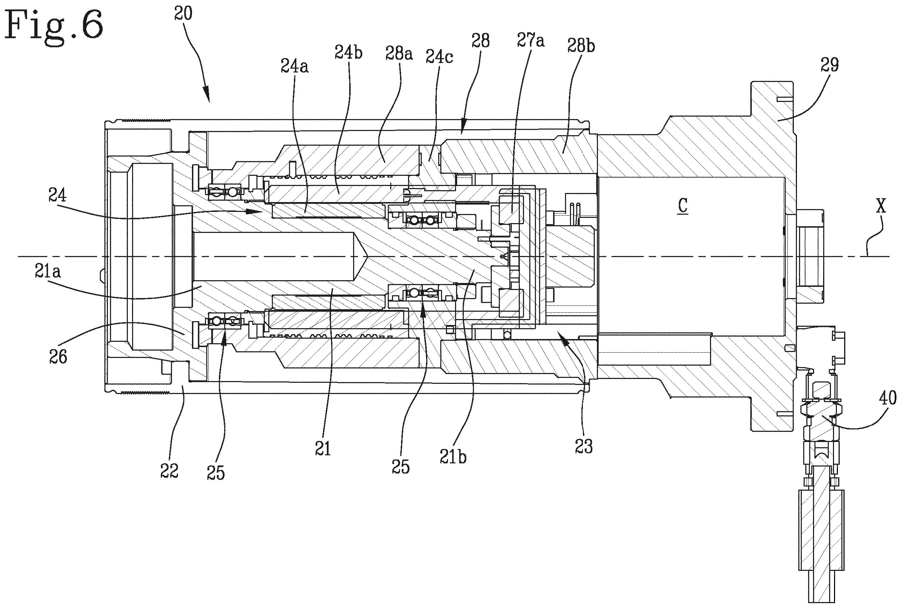

Figure 5, and even more so, the enlarged views of Figures 6 to 9, illustrate the internal structure of the upper rollers 20, 20'.

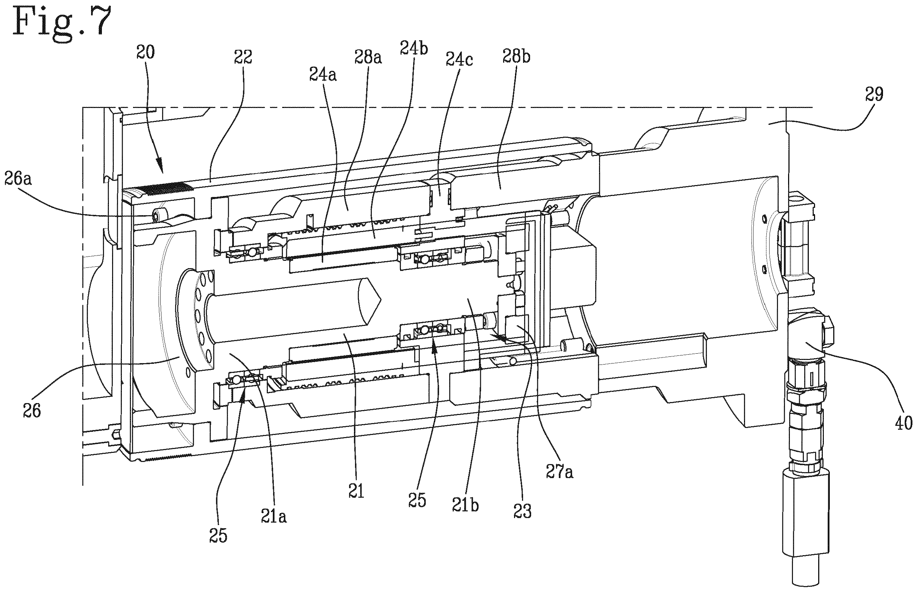

Figures 6 and 7 illustrate in detail the innermost upper roller 20, that is to say, closest to the vertical wall 10 of the machine 1. The roller 20, which is structurally similar to the corresponding outer roller 20' coaxial with it, will now be described in more detail. The same elements of the two rollers 20, 20' are labelled in the drawings with the same number, with the addition of the superscript.

The central shaft 21, kept in a position coaxial with the axis "X" by a pair of bearings 25, extends from a first end 21a opposite the vertical wall 10 and a second end 21b opposite the first end and facing towards the wall 10. Since the roller 20 is mounted in cantilever fashion on the wall 10, the first end 21a of the shaft 21 is free from constraints.

At the first end 21a, the shaft 21 has a connecting portion 26 configured for fixing to the mantle 22 in such a way that the shaft 21 and the mantle 22 are rotationally integral about the axis "X". In particular, the connecting portion 26 is defined by a radial expansion of the shaft 21 away from the axis "X", that is to say, a portion with larger diameter, which defines a flanged portion configured for connection to the mantle 22, in particular using threaded elements 26a inserted in a succession of peripheral holes angularly positioned about the axis "X". The flanged portion also defines a cover for closing the internal compartment 23.

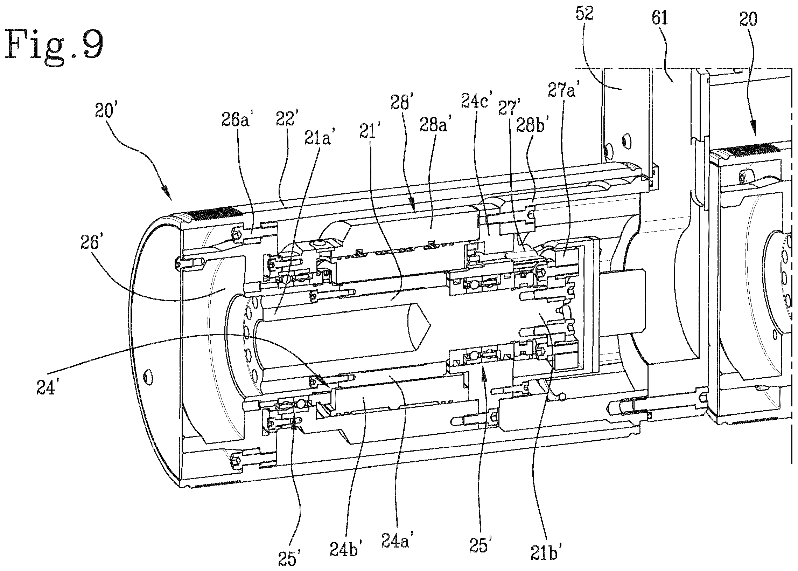

Preferably, as shown in Figure 9 (it is not visible in Figure 7 since it is positioned in an angular position not suitable for displaying it) the shaft 21' of each upper roller 20, 20' has, on the above-mentioned second end 21b', an angular detecting disc 27a' operatively associated with a fixed encoder or resolver 27', facing it for detecting the absolute angular position of the shaft 21' about the axis "X" (as shown in Figure 9).

In order to support the stator 24b in a fixed position and interposed between the rotor 24a and the mantle 22, the stator 24b is mounted on, or integral with, a fixed supporting element 28, in particular shaped as a supporting sleeve, in turn mounted in cantilever fashion on the vertical wall 10 of the machine 1.

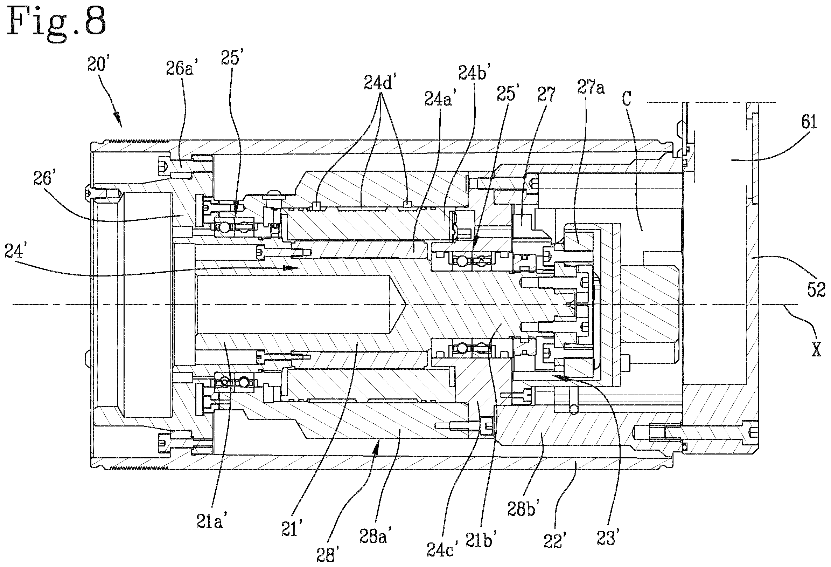

In more detail, the stator 24b has an annular shape and is located in a position radially inside the fixed supporting element 28. This preferably allows, as in the embodiment illustrated in Figures 7 and 8, that the fixed supporting element 28 supports internally at least one of the above-mentioned two bearings 25, in particular the one positioned close to the first end 21a of the central shaft 21.

Moreover, the fixed supporting element 28 supports the encoder 27 in a position suitable for detecting the angular position of the detecting disc 27a.

According to the embodiment illustrated in Figures 7 and 8, the fixed supporting element 28 comprises two parts 28a, 28b axially aligned along the axis of rotation "X" and between which is interposed, and fixed to them for example by threaded means, a radial connecting protrusion 24c (having a preferably annular shape) of the stator 24b. The fixed supporting element 28 also has, or is connectable to, a connecting flange 29 fixable in a removable fashion to the vertical wall 10. The connecting flange 29 can be connected to the vertical wall 10 in an adjustable fashion at least in a vertical plane defined by the wall, preferably using threaded means and fastening slots having an elongate shape. In that way, by releasing the threaded elements it is possible to modify the position of the connecting flange 29, and therefore of the entire roller 20, along the wall 10 and then fix it again in the desired position. This advantageously allows a modification of the size being processed on the machine 1 or an adjustment of the thickness of the web 100 or other adjustments.

According to a preferred aspect of the invention, the stator 24b has at least one cooling circuit 24d, in particular using liquid or air, connected or connectable to an external source of fluid. The cooling circuit 24d, which comprises one or more channels 24e (shown more clearly in the view of Figure 8 or 9), extends partly through the fixed supporting element 28 in such a way as to connect the channels 24e to an external source of cooling fluid. Preferably, the cooling fluid is air and the cooling circuit 24d leads, from the side facing towards the wall 10, into a head chamber "C", formed inside the fixed supporting element 28. One or more suitable connectors 40 connect the cooling circuit 24d to the external source.

As described above, the upper rollers 20, 20' are made in the same way.

The inner roller 20 is applied to the vertical wall 10 whilst the outer roller 20' is mounted on a supporting arm 50 above the inner roller 20.

In more detail, the supporting arm 50 has a first portion 51, mounted in a cantilever fashion on the vertical wall 10 and extending along an axis "Y" parallel to the axis "X" of the upper rollers 20, 20', and a second portion 52 perpendicular to the first portion 51 and having a first end connected to the first portion 51 and a second end supporting in a cantilever fashion the outer roller 20'. The second end of the second portion 51 of the arm 50 is positioned in a zone axially interposed between the two rollers 20, 20' and is separated (even though at a reduced distance to reduce the overall dimensions) from the free end of the inner roller 20.

The two portions 51, 52 of the arm 50 are preferably rigidly connected to the second portion 52 which remains parallel to the vertical plane defined by the vertical wall 10. Moreover, the first portion 51 is rotatable about the respective axis "Y" in such a way as to move the outer roller 20' in the above-mentioned plane parallel to the vertical plane of the wall 10 between an operating position (Figure 2), wherein the two upper rollers 20, 20' are aligned coaxially with each other, and a non-operating position (Figure 3) wherein the arm 50 is rotated and the two upper rollers 20, 20' are misaligned, for example to define a size changeover condition of the machine 1. Preferably, outside the first portion 51 there is an outer jacket 51a supporting rotatably, inside it, the first portion 51 for example by ball bearings.

As a result, the two upper rollers 20, 20' are independent of each other both at structural level (the rollers are not connected to each other in any way nor supported on the vertical wall 10 by means of elements in common) and operatively, since they are equipped with individual and independent electric motors.

Moreover, with reference to the outer roller 20', suitable conduits (illustrated by means of the stretches 60, 61 in Figure 5, wherein a first stretch 60 is inside the first portion 51 of the arm 50 and a second stretch 61 is inside the second portion 52 of the arm 50) transmit the cooling fluid from the respective source to the stator 24', also by means of one or more suitable connectors 40'. Similarly, the arm 50 has or supports electrical connections (not illustrated) for powering the electric motor 23'.

Although the invention is in this context described with reference to the above-mentioned machine, it may also be extended to other machines for the tobacco industry where it uses (or is suitable to use) rollers of the type described above, for example machines for the treatment of crimped tobacco webs or machines for making packets, in particular in the field of rollers for feeding continuous webs of paper or other material.

The invention may also be extended to machines not belonging to the tobacco sector but in any case using rollers or pairs of rollers for the transfer and/or processing of material for forming and/or packaging products, for example machines for packaging sanitary articles, wherein the rollers can be used, for example, for making or for conveying a continuous web of absorbent and/or multilayer material, or machines for making containers made of multilayer material for liquids, in particular brik packs or the like, wherein the rollers can be used, for example, for making or conveying a continuous multilayer web, or a machine for packaging food products, in particular small products such as chocolates, sweets or the like, wherein the rollers can, for example, be used for making or conveying a continuous web for packing single products or groups of products.

Moreover, the invention may also extend to the lower rollers 30, 30' (or in any case those described above as idle), which can also be equipped with the same internal drive unit such as the upper rollers, where desired.

Moreover, in accordance with a different embodiment not illustrated, the electric motor 24, 24' may be positioned with a relative fixed inner part (stator) fixed to the central support 21, 21', which therefore acts as a pin instead of a shaft, and a rotor outside and coaxial with the central pin 21, 21' integral with the mantle 22, 22', for example integral with the inner surface of the mantle 22, 22'. In this configuration the outer rotor can be mounted directly, by means of bearings, on the fixed inner part (stator), the latter defining the support of the entire roller 10, 10' relative to the vertical wall 10.

The present invention achieves the preset aims, overcoming the disadvantages of the prior art.

The individual drive of each roller, obtained by means of a respective electric motor in the inner compartment of each roller, allows a very fast fitting and removal of the roller in the case of maintenance or size changeover.

Moreover, this considerably increases the constructional simplicity of the machine, which in its base structure no longer requires the anchoring of the motors to the vertical wall.

Lastly, the adjustability of the rollers and their versatility both in the positioning and in the switching to a non-operating or size changeover position is evident.

## Claims

1. A machine for making smoking articles, comprising a plurality of operating means (20, 20', 30, 30') for transferring and/or processing material for forming and/or making the smoking articles, at least some of the operating means (20, 20') being embodied by rollers (20, 20') rotatable about respective axes (X), mounted coaxially with each other and/or on axes (X) which are parallel to each other, the rollers (20, 20') being supported by a substantially vertical wall (10) of a supporting base, each roller (20, 20') having a respective central support (21, 21'), a cylindrical outer mantle (22, 22') and an internal compartment (23, 23'), interposed between the central support (21, 21') and the mantle (22, 22'), wherein at least one of the rollers (20, 20') comprises an electric motor (24, 24') mounted inside the internal compartment (23, 23') and configured to set the mantle (22, 22') in rotation about the respective axis (X); wherein the machine is configured as a twin-line machine and wherein at least some of the operating means (20, 20') are embodied by pairs of rollers (20, 20') wherein the rollers (20, 20') of each pair are mounted axially side by side along the common axis of rotation (X), wherein a first roller (20) of each pair of rollers is cantilevered, preferably directly, to the vertical wall (10) and wherein the second roller (20') of the pair of rollers, disposed further away from the vertical wall (10), is supported by the vertical wall (10) by means of a supporting arm (50) surmounting the first roller (20) of the pair of rollers.

2. The machine according to claim 1, wherein the central support (21, 21') in the roller (20, 20') is in the form of a shaft which is rotatable about the axis (X) and as one with the mantle (22, 22') about the axis (X), and wherein the rotor (24a, 24a') of the electric motor (24, 24') is rotatably integral with the shaft (21, 21'), in particular fixed to the shaft (21, 21') or integral with the shaft (21, 21').

3. The machine according to claim 2, wherein the stator (24b, 24b') of the electric motor (24, 24') in the roller (20, 20') is fixed and interposed between the rotor (24a, 24a') and the mantle (22, 22') and wherein the stator (24b, 24b') is mounted on, or is integral with, a fixed supporting element (28), preferably a supporting sleeve, which is in turn mounted in cantilevered fashion to the vertical wall (10) of the supporting base.

4. The machine according to claim 3, wherein the fixed supporting element (28) is provided with, or is connectable to, a connecting flange (29) which can be removably fixed to the vertical wall (10), and wherein the connecting flange (29) is connectable to the vertical wall (10) adjustably at least in a vertical plane defined by the wall (10), preferably by threaded means and fastening slots having an elongated shape.

5. The machine according to claim 3 or 4, further comprising at least one cooling circuit (24d, 24d'), specifically a liquid or air cooling circuit, which is connected or connectable to an external fluid source and is configured to cool the motor (24, 24') and/or the entire roller (10, 10'), the cooling circuit (24d, 24d') preferably extending at least partly through the stator (24b, 24b') of the electric motor (24, 24').

6. The machine according to claim 5, wherein the cooling circuit (24d, 24d') extends partly through the fixed supporting element (28).

7. The machine according to any one of claims 2 to 6, wherein the shaft (21, 21') in the roller (20, 20') has, at its first end (21a, 21a') a connecting portion (26, 26') configured for fastening to the mantle (22, 22'); the shaft (21, 21') preferably having, at its opposite end (21b, 21b') an angular detecting disc (27a, 27a') for an encoder (27, 27').

8. The machine according to claim 7, wherein the connecting portion (26, 26') is defined by a radial expansion of the first end (21a, 21a') of the shaft (21, 21') and is configured as a flanged portion for connection to the mantle (22, 22'), specifically by threaded means;
the flanged portion defining a cover for closing the internal compartment (23, 23').

9. The machine according to claim 7 or 8, wherein the roller (20, 20') further comprises, inside the internal compartment (23, 23'), an angular encoder (27, 27') facing the angular detecting disc (27a, 27a') and preferably disposed in the proximity of the stator (24b, 24b') of the electric motor (24, 24').

10. The machine according to any one of the preceding claims, wherein the electric motor (24, 24') is a brushless motor.

11. The machine according to claim 1 or 10, wherein the central support (21, 21') in the roller (20, 20') is in the form of a fixed pin disposed on the axis (X) and wherein the electric motor (24, 24') has an internal stator which is fixed to or integral with the fixed pin and an external rotor disposed round the internal stator and rotatable about the axis (X), and wherein the external rotor is fixed to the mantle (22, 22'), preferably to an inside surface of the mantle (22, 22'), or is integral with the mantle (22, 22').

12. The machine according to any one of the preceding claims, wherein the roller (20, 20') is a stretching roller (4a, 4b, 4c) of a machine for processing a strip of filter material (100) and acts in conjunction with a matching counter-roller (30, 30') which is preferably idle.

13. The machine according to any one of the preceding claims, wherein the supporting arm (50) has a first portion (51) which is cantilevered to the vertical wall (10) and a second portion (52) to which the second roller (20') is cantilevered, and wherein the second portion (52) of the supporting arm (50) has one end on which the second roller (20') is applied and which is interposed between the first and the second roller (20, 20') of the pair of rollers.

14. The machine according to claim 13, wherein the first portion (51) is extending along a respective axis (Y) parallel to the common axis of rotation (X) of the pair of rollers (20, 20') and wherein the second portion (52), rigidly connected to the first portion (51), is perpendicular to the first portion (51) and it remains parallel to a plane defined by the vertical wall (10); wherein the first portion (51) is rotatable about the respective axis (Y) in such a way as to move the second roller (20') parallel to said plane defined by the vertical plane of the wall (10) between an operating position, wherein the two upper rollers of each pair of rollers (20, 20') are aligned coaxially with each other, and a non-operating position, wherein the arm (50) is rotated and the two rollers of each pair of rollers (20, 20') are misaligned.

15. A machine for making sanitary articles, specifically absorbent articles such as nappies, for example, comprising a plurality of operating means for transferring and/or processing material for forming and/or making the sanitary articles, at least some of the operating means (20, 20') being embodied by rollers (20, 20') which are mounted coaxially with each other and/or on parallel axes (X) and supported by a substantially vertical wall (10) of a supporting base, each roller (20, 20') having a respective central support (21, 21'), a cylindrical outer mantle (22, 22') and an internal compartment (23, 23'), interposed between the central support (21, 21') and the mantle (22, 22'), wherein at least one of the rollers (20, 20') comprises an electric motor (24, 24') mounted inside the internal compartment (23, 23') and configured to set the mantle (22, 22') in rotation about the respective axis (X); wherein the machine is configured as a twin-line machine and wherein at least some of the operating means (20, 20') are embodied by pairs of rollers (20, 20') wherein the rollers (20, 20') of each pair are mounted axially side by side along the common axis of rotation (X), wherein a first roller (20) of each pair of rollers is cantilevered, preferably directly, to the vertical wall (10) and wherein the second roller (20') of the pair of rollers, disposed further away from the vertical wall (10), is supported by the vertical wall (10) by means of a supporting arm (50) surmounting the first roller (20) of the pair of rollers.

16. A machine for making containers of multilayer material for liquids or powders, specifically brik packs, capsules or the like, comprising a plurality of operating means for transferring and/or processing material for forming and/or making the containers, at least some of the operating means (20, 20') being embodied by rollers (20, 20') which are mounted coaxially with each other and/or on parallel axes (X) and supported by a substantially vertical wall (10) of a supporting base, each roller (20, 20') having a respective central support (21, 21'), a cylindrical outer mantle (22, 22') and an internal compartment (23, 23'), interposed between the central support (21, 21') and the mantle (22, 22'), wherein at least one of the rollers (20, 20') comprises an electric motor (24, 24') mounted inside the internal compartment (23, 23') and configured to set the mantle (22, 22') in rotation about the respective axis (X); wherein the machine is configured as a twin-line machine and wherein at least some of the operating means (20, 20') are embodied by pairs of rollers (20, 20') wherein the rollers (20, 20') of each pair are mounted axially side by side along the common axis of rotation (X), wherein a first roller (20) of each pair of rollers is cantilevered, preferably directly, to the vertical wall (10) and wherein the second roller (20') of the pair of rollers, disposed further away from the vertical wall (10), is supported by the vertical wall (10) by means of a supporting arm (50) surmounting the first roller (20) of the pair of rollers.

17. A machine for packaging food products, specifically small products such as chocolates, sweets or the like, comprising a plurality of operating means for transferring and/or processing material for making up and/or packaging the food products, at least some of the operating means (20, 20') being embodied by rollers (20, 20') which are mounted coaxially with each other and/or on parallel axes (X) and supported by a substantially vertical wall (10) of a supporting base, each roller (20, 20') having a respective central support (21, 21'), a cylindrical outer mantle (22, 22') and an internal compartment (23, 23'), interposed between the central support (21, 21') and the mantle (22, 22'), wherein at least one of the rollers (20, 20') comprises an electric motor (24, 24') mounted inside the internal compartment (23, 23') and configured to set the mantle (22, 22') in rotation about the respective axis (X); wherein the machine is configured as a twin-line machine and wherein at least some of the operating means (20, 20') are embodied by pairs of rollers (20, 20') wherein the rollers (20, 20') of each pair are mounted axially side by side along the common axis of rotation (X), wherein a first roller (20) of each pair of rollers is cantilevered, preferably directly, to the vertical wall (10) and wherein the second roller (20') of the pair of rollers, disposed further away from the vertical wall (10), is supported by the vertical wall (10) by means of a supporting arm (50) surmounting the first roller (20) of the pair of rollers.

## Patentansprüche

1. Maschine zur Herstellung von Rauchartikeln, umfassend eine Vielzahl von Betriebsmitteln (20, 20', 30, 30'), um Material zum Formen und/oder Herstellen der Rauchartikel zu transferieren und/oder zu bearbeiten, wobei mindestens einige der Betriebsmittel (20, 20') durch Rollen (20, 20') verkörpert sind, die um jeweilige Achsen (X) drehbar sind, die koaxial zueinander montiert sind, und/oder auf Achsen (X), die parallel zueinander angeordnet sind, wobei die Rollen (20, 20') von einer im Wesentlichen vertikalen Wand (10) einer Stützbasis gestützt werden, wobei eine jede Rolle (20, 20') eine jeweilige mittige Stütze (21, 21'), einen zylindrischen Außenmantel (22, 22') und eine interne Unterteilung (23, 23') aufweist, die zwischen der mittigen Stütze (21, 21') und dem Mantel (22, 22') eingesetzt ist, wobei mindestens eine der Rollen (20, 20') einen Elektromotor (24, 24') umfasst, der in der internen Unterteilung (23, 23') montiert und ausgelegt ist, um den Mantel (22, 22') um die jeweilige Achse (X) in Drehung zu versetzen, wobei die Maschine als Zweibahnenmaschine ausgelegt ist und wobei mindestens einige der Betriebsmittel (20, 20') durch ein Paar von Rollen (20, 20') verkörpert sind, wobei die Rollen (20, 20') eines jeden Paars axial nebeneinander entlang der gemeinsamen Rotationsachse (X) montiert sind, wobei eine erste Rolle (20) eines jeden Paars von Rollen vorzugsweise direkt zur vertikalen Wand (10) auskragend ist und wobei die zweite Rolle (20') des Paars von Rollen weiter entfernt von der vertikalen Wand (10) angeordnet ist und durch die vertikale Wand (10) mittels eines Stützarms (50) gestützt wird, der die erste Rolle (20) des Paars von Rollen überlagernd angeordnet ist.

2. Maschine nach Anspruch 1, wobei die mittige Stütze (21, 21') in der Rolle (20, 20') in der Form einer Welle ausgebildet ist, die um die Achse (X) in einem Stück mit dem Mantel (22, 22') um die Achse (X) drehbar ist, und wobei der Rotor (24a, 24a') des Elektromotors (24, 24') fest verbunden mit der Welle (21, 21') drehbar ist, insbesondere fixiert an der Welle (21, 21') oder fest verbunden mit der Welle (21, 21').

3. Maschine nach Anspruch 2, wobei der Stator (24b, 24b') des Elektromotors (24, 24') in der Rolle (20, 20') fixiert und zwischen dem Rotor (24a, 24a') und dem Mantel (22, 22') eingesetzt ist und wobei der Stator (24b, 24b') auf einem fixen Stützelement (28) montiert oder fest mit diesem verbunden ist, vorzugsweise einer Stützhülse, die wiederum auskragend an der vertikalen Wand (10) der Stützbasis montiert ist.

4. Maschine nach Anspruch 3, wobei das fixe Stützelement (28) mit einem Verbindungsflansch (29) versehen oder mit diesem verbindbar ist, der entfernbar an der vertikalen Wand (10) fixiert werden kann, und wobei der Verbindungsflansch (29) mit der vertikalen Wand (10) zumindest in eine vertikale Ebene verstellbar verbindbar ist, die durch die Wand (10) definiert ist, vorzugsweise durch Gewindemittel und Befestigungsnuten, aufweisend eine längliche Form.

5. Maschine nach Anspruch 3 oder 4, zudem umfassend mindestens einen Kühlkreislauf (24d, 24d'), insbesondere einen Flüssigkeits- oder Luftkühlkreislauf, der mit einer externen Fluidquelle verbunden oder verbindbar und ausgelegt ist, um den Motor (24, 24') und/oder die ganze Rolle (10, 10') zu kühlen, wobei sich der Kühlkreislauf (24d, 24d') vorzugsweise mindestens teilweise durch den Stator (24b, 24b') des Elektromotors (24, 24') erstreckt.

6. Maschine nach Anspruch 5, wobei sich der Kühlkreislauf (24d, 24d') teilweise durch das fixe Stützelement (28) erstreckt.

7. Maschine nach einem der Ansprüche 2 bis 6, wobei die Welle (21, 21') in der Rolle (20, 20') an ihrem ersten Ende (21a, 21a') einen Verbindungsabschnitt (26, 26') aufweist, der ausgelegt ist, um den Mantel (22, 22') zu befestigen, wobei die Welle (21, 21') vorzugsweise an ihrem entgegengesetzten Ende (21b, 21b') eine winkelige Erfassungsscheibe (27a, 27a') für einen Encoder (27, 27') aufweist.

8. Maschine nach Anspruch 7, wobei der Verbindungsabschnitt (26, 26') durch eine radiale Expansion des ersten Endes (21a, 21a') der Welle (21, 21') definiert und als Flanschabschnitt für die Verbindung mit dem Mantel (22, 22'), insbesondere durch Gewindemittel, ausgelegt ist,
wobei der Flanschabschnitt eine Abdeckung zum Verschließen der internen Unterteilung (23, 23') definiert.

9. Maschine nach Anspruch 7 oder 8, wobei die Rolle (20, 20') zudem in der internen Unterteilung (23, 23') einen Winkelencoder (27, 27') umfasst, der der winkeligen Erfassungsscheibe (27a, 27a') zugewandt und vorzugsweise in der Nähe des Stators (24b, 24b') des Elektromotors (24, 24') angeordnet ist.

10. Maschine nach einem der vorhergehenden Ansprüche, wobei es sich beim Elektromotor (24, 24') um einen bürstenlosen Motor handelt.

11. Maschine nach Anspruch 1 oder 10, wobei die mittige Stütze (21, 21') in der Rolle (20, 20') in der Form eines fixen Zapfens ausgebildet ist, der auf der Achse (X) angeordnet ist, und wobei der Elektromotor (24, 24') einen internen Stator aufweist, der am fixen Zapfen fixiert oder fest mit diesem verbunden ist, und einen externen Rotor, der rund um den internen Stator angeordnet und um die Achse (X) drehbar ist, wobei der externe Rotor am Mantel (22, 22') fixiert ist, vorzugsweise an einer innenseitigen Oberfläche des Mantels (22, 22'), oder fest mit dem Mantel (22, 22') verbunden ist.

12. Maschine nach einem der vorhergehenden Ansprüche, wobei die Rolle (20, 20') eine Streckrolle (4a, 4b, 4c) einer Maschine zum Bearbeiten eines Streifens aus Filtermaterial (100) ist und in Verbindung mit einer passenden Gegenrolle (30, 30') arbeitet, die vorzugsweise frei laufend ist.

13. Maschine nach einem der vorhergehenden Ansprüche, wobei der Stützarm (50) einen ersten Abschnitt (51) aufweist, der auskragend zur vertikalen Wand (10) angeordnet ist, und einen zweiten Abschnitt (52), zu dem die zweite Rolle (20') auskragend angeordnet ist, wobei der zweite Abschnitt (52) des Stützarms (50) ein Ende aufweist, an dem die zweite Rolle (20') angebracht ist, und das zwischen der ersten und der zweiten Rolle (20, 20') des Paars von Rollen eingesetzt ist.

14. Maschine nach Anspruch 13, wobei sich der erste Abschnitt (51) entlang einer jeweiligen Achse (Y) erstreckt, die parallel zur gemeinsamen Rotationsachse (X) des Paars von Rollen (20, 20') angeordnet ist, und wobei der zweite Abschnitt (52), der steif mit dem ersten Abschnitt (51) verbunden ist, senkrecht zum ersten Abschnitt (51) und parallel zu einer Ebene angeordnet ist, die durch die vertikale Wand (10) definiert ist, wobei der erste Abschnitt (51) um die jeweilige Achse (Y) drehbar ist, sodass die zweite Rolle (20') parallel zur durch die vertikale Ebene der Wand (10) definierten Ebene zwischen einer Betriebsposition, in der die zwei oberen Rollen eines jeden Paars von Rollen (20, 20') koaxial zueinander ausgerichtet sind, und einer Nichtbetriebsposition, in der der Arm (50) gedreht ist und die zwei Rollen eines jeden Paars von Rollen (20, 20') nicht zueinander ausgerichtet sind, bewegt wird.

15. Maschine zur Herstellung von Sanitärartikeln, insbesondere saugfähigen Artikeln wie z. B. Windeln, umfassend eine Vielzahl von Betriebsmitteln, um Material zum Formen und/oder Herstellen von Sanitärartikeln zu transferieren und/oder zu bearbeiten, wobei mindestens einige der Betriebsmittel (20, 20') durch Rollen (20, 20') verkörpert sind, die koaxial zueinander und/oder auf parallelen Achsen (X) montiert sind und von einer im Wesentlichen vertikalen Wand (10) einer Stützbasis gestützt werden, wobei eine jede Rolle (20, 20') eine jeweilige mittige Stütze (21, 21'), einen zylindrischen Außenmantel (22, 22') und eine interne Unterteilung (23, 23') aufweist, die zwischen der mittigen Stütze (21, 21') und dem Mantel (22, 22') eingesetzt ist, wobei mindestens eine der Rollen (20, 20') einen Elektromotor (24, 24') umfasst, der in der internen Unterteilung (23, 23') montiert und ausgelegt ist, um den Mantel (22, 22') um die jeweilige Achse (X) in Drehung zu versetzen, wobei die Maschine als Zweibahnenmaschine ausgelegt ist und wobei mindestens einige der Betriebsmittel (20, 20') durch ein Paar von Rollen (20, 20') verkörpert sind, wobei die Rollen (20, 20') eines jeden Paars axial nebeneinander entlang der gemeinsamen Rotationsachse (X) montiert sind, wobei eine erste Rolle (20) eines jeden Paars von Rollen vorzugsweise direkt zur vertikalen Wand (10) auskragend ist und wobei die zweite Rolle (20') des Paars von Rollen weiter entfernt von der vertikalen Wand (10) angeordnet ist und durch die vertikale Wand (10) mittels eines Stützarms (50) gestützt wird, der die erste Rolle (20) des Paars von Rollen überlagernd angeordnet ist.

16. Maschine zur Herstellung von Behältern aus mehrschichtigem Material für Flüssigkeiten oder Pulver, insbesondere von Getränkekartons, Kapseln oder dergleichen, umfassend eine Vielzahl von Betriebsmitteln, um Material zum Formen und/oder Herstellen der Behälter zu transferieren und/oder zu bearbeiten, wobei mindestens einige der Betriebsmittel (20, 20') durch Rollen (20, 20') verkörpert sind, die koaxial zueinander und/oder auf parallelen Achsen (X) montiert sind und von einer im Wesentlichen vertikalen Wand (10) einer Stützbasis gestützt werden, wobei eine jede Rolle (20, 20') eine jeweilige mittige Stütze (21, 21'), einen zylindrischen Außenmantel (22, 22') und eine interne Unterteilung (23, 23') aufweist, die zwischen der mittigen Stütze (21, 21') und dem Mantel (22, 22') eingesetzt ist, wobei mindestens eine der Rollen (20, 20') einen Elektromotor (24, 24') umfasst, der in der internen Unterteilung (23, 23') montiert und ausgelegt ist, um den Mantel (22, 22') um die jeweilige Achse (X) in Drehung zu versetzen,
wobei die Maschine als Zweibahnenmaschine ausgelegt ist und wobei mindestens einige der Betriebsmittel (20, 20') durch ein Paar von Rollen (20, 20') verkörpert sind, wobei die Rollen (20, 20') eines jeden Paars axial nebeneinander entlang der gemeinsamen Rotationsachse (X) montiert sind, wobei eine erste Rolle (20) eines jeden Paars von Rollen vorzugsweise direkt zur vertikalen Wand (10) auskragend ist und wobei die zweite Rolle (20') des Paars von Rollen weiter entfernt von der vertikalen Wand (10) angeordnet ist und durch die vertikale Wand (10) mittels eines Stützarms (50) gestützt wird, der die erste Rolle (20) des Paars von Rollen überlagernd angeordnet ist.

17. Maschine zur Verpackung von Nahrungsmittelprodukten, insbesondere von kleinen Produkten wie Schokolade, Süßigkeiten oder dergleichen, umfassend eine Vielzahl von Betriebsmitteln, um Material zum Formen und/oder Herstellen von Verpackungen der Nahrungsmittelprodukte zu transferieren und/oder zu bearbeiten, wobei mindestens einige der Betriebsmittel (20, 20') durch Rollen (20, 20') verkörpert sind, die koaxial zueinander und/oder auf parallelen Achsen (X) montiert sind und von einer im Wesentlichen vertikalen Wand (10) einer Stützbasis gestützt werden, wobei eine jede Rolle (20, 20') eine jeweilige mittige Stütze (21, 21'), einen zylindrischen Außenmantel (22, 22') und eine interne Unterteilung (23, 23') aufweist, die zwischen der mittigen Stütze (21, 21') und dem Mantel (22, 22') eingesetzt ist, wobei mindestens eine der Rollen (20, 20') einen Elektromotor (24, 24') umfasst, der in der internen Unterteilung (23, 23') montiert und ausgelegt ist, um den Mantel (22, 22') um die jeweilige Achse (X) in Drehung zu versetzen,
wobei die Maschine als Zweibahnenmaschine ausgelegt ist und wobei mindestens einige der Betriebsmittel (20, 20') durch ein Paar von Rollen (20, 20') verkörpert sind, wobei die Rollen (20, 20') eines jeden Paars axial nebeneinander entlang der gemeinsamen Rotationsachse (X) montiert sind, wobei eine erste Rolle (20) eines jeden Paars von Rollen vorzugsweise direkt zur vertikalen Wand (10) auskragend ist und wobei die zweite Rolle (20') des Paars von Rollen weiter entfernt von der vertikalen Wand (10) angeordnet ist und durch die vertikale Wand (10) mittels eines Stützarms (50) gestützt wird, der die erste Rolle (20) des Paars von Rollen überlagernd angeordnet ist.

## Revendications

1. Machine pour fabriquer des articles à fumer, comprenant une pluralité de moyens d'actionnement (20, 20', 30, 30') pour transférer et/ou traiter un matériau pour former et/ou fabriquer les articles à fumer, au moins certains des moyens d'actionnement (20, 20') étant configurés par des rouleaux (20, 20') rotatifs autour d'axes respectifs (X), montés coaxialement les uns aux autres et/ou sur des axes (X) qui sont parallèles les uns aux autres, les rouleaux (20, 20') étant supportés par une paroi essentiellement verticale (10) d'une base de support, chaque rouleau (20, 20') ayant un support central respectif (21, 21'), une enveloppe extérieure cylindrique (22, 22') et un compartiment interne (23, 23'), interposé entre le support central (21, 21') et l'enveloppe (22, 22'), dans laquelle au moins l'un des rouleaux (20, 20') comprend un moteur électrique (24, 24') monté à l'intérieur du compartiment interne (23, 23') et configuré pour mettre en rotation l'enveloppe (22, 22') autour de l'axe respectif (X) ;
la machine étant configurée comme une machine à deux lignes et dans laquelle au moins une partie des moyens d'actionnement (20, 20') sont configurés par des paires de rouleaux (20, 20') dans laquelle les rouleaux (20, 20') de chaque paire sont montés axialement côte à côte le long de l'axe de rotation commun (X), dans laquelle un premier rouleau (20) de chaque paire de rouleaux est en porte-à-faux, de préférence directement, à la paroi verticale (10) et dans lequel le second rouleau (20') de la paire de rouleaux, disposé plus éloigné de la paroi verticale (10), est supporté par la paroi verticale (10) au moyen d'un bras de support (50) surmontant le premier rouleau (20) de la paire de rouleaux.

2. Machine selon la revendication 1, dans laquelle le support central (21, 21') dans le rouleau (20, 20') est sous la forme d'un arbre qui peut tourner autour de l'axe (X) et en même temps que l'enveloppe (22, 22') autour de l'axe (X), et dans laquelle le rotor (24a, 24a') du moteur électrique (24, 24') est solidaire en rotation de l'arbre (21, 21'), en particulier fixé à l'arbre (21, 21') ou solidaire de l'arbre (21, 21').

3. Machine selon la revendication 2, dans laquelle le stator (24b, 24b') du moteur électrique (24, 24') dans le rouleau (20, 20') est fixé et interposé entre le rotor (24a, 24a') et l'enveloppe (22, 22') et dans laquelle le stator (24b, 24b') est monté sur, ou est solidaire d'un élément de support fixe (28), de préférence un manchon de support, qui est lui-même monté en porte-à-faux sur la paroi verticale (10) de la base de support.

4. Machine selon la revendication 3, dans laquelle l'élément de support fixe (28) est muni de, ou peut être relié à, une bride de liaison (29) qui peut être fixée de manière amovible à la paroi verticale (10), et dans laquelle la bride de liaison (29) peut être reliée à la paroi verticale (10) de manière réglable au moins dans un plan vertical défini par la paroi (10), de préférence par des moyens filetés et des fentes de fixation ayant une forme allongée.

5. Machine selon la revendication 3 ou 4, comprenant en outre au moins un circuit de refroidissement (24d, 24d'), notamment un circuit de refroidissement par liquide ou par air, qui est relié ou peut être relié à une source de fluide externe et est configuré pour refroidir le moteur (24, 24') et/ou l'ensemble du rouleau (10, 10'), le circuit de refroidissement (24d, 24d') s'étendant de préférence au moins partiellement à travers le stator (24b, 24b') du moteur électrique (24, 24').

6. Machine selon la revendication 5, dans laquelle le circuit de refroidissement (24d, 24d') s'étend partiellement à travers l'élément de support fixe (28).

7. Machine selon l'une quelconque des revendications 2 à 6, dans laquelle l'arbre (21, 21') dans le rouleau (20, 20') comporte, à sa première extrémité (21a, 21a'), une partie de liaison (26, 26') configurée pour être fixée à l'enveloppe (22, 22') ; l'arbre (21, 21') comportant de préférence, à son extrémité opposée (21b, 21b'), un disque de détection angulaire (27a, 27a') pour un codeur (27, 27').

8. Machine selon la revendication 7, dans laquelle la partie de liaison (26, 26') est définie par une expansion radiale de la première extrémité (21a, 21a') de l'arbre (21, 21') et est configurée comme une partie bridée pour la liaison à l'enveloppe (22, 22'), spécifiquement par des moyens filetés ;
la partie bridée définissant un couvercle pour fermer le compartiment interne (23, 23').

9. Machine selon la revendication 7 ou 8, dans laquelle le rouleau (20, 20') comprend en outre, à l'intérieur du compartiment interne (23, 23'), un codeur angulaire (27, 27') faisant face au disque de détection angulaire (27a, 27a') et disposé de préférence à proximité du stator (24b, 24b') du moteur électrique (24, 24').

10. Machine selon l'une quelconque des revendications précédentes, dans laquelle le moteur électrique (24, 24') est un moteur sans balai.

11. Machine selon la revendication 1 ou 10, dans laquelle le support central (21, 21') dans le rouleau (20, 20') est sous la forme d'une broche fixe disposée sur l'axe (X) et dans laquelle le moteur électrique (24, 24') a un stator interne qui est fixé à ou solidaire de la broche fixe et un rotor externe disposé autour du stator interne et pouvant tourner autour de l'axe (X), et dans lequel le rotor externe est fixé à l'enveloppe (22, 22'), de préférence à une surface intérieure de l'enveloppe (22, 22'), ou est solidaire de l'enveloppe (22, 22').

12. Machine selon l'une quelconque des revendications précédentes, dans laquelle le rouleau (20, 20') est un rouleau d'étirage (4a, 4b, 4c) d'une machine de traitement d'un ruban de matériau filtrant (100) et agit en liaison avec un contre-rouleau adapté (30, 30') qui est de préférence inactif.

13. Machine selon l'une quelconque des revendications précédentes, dans laquelle le bras de support (50) a une première partie (51) qui est en porte-à-faux par rapport à la paroi verticale (10) et une seconde partie (52) sur laquelle le second rouleau (20') est en porte-à-faux, et dans laquelle la seconde partie (52) du bras de support (50) a une extrémité sur laquelle le second rouleau (20') est appliqué et qui est interposée entre le premier et le second rouleau (20, 20') de la paire de rouleaux.

14. Machine selon la revendication 13, dans laquelle la première partie (51) s'étend le long d'un axe respectif (Y) parallèle à l'axe de rotation commun (X) de la paire de rouleaux (20, 20') et dans laquelle la seconde partie (52), reliée de manière rigide à la première partie (51), est perpendiculaire à la première partie (51) et elle reste parallèle à un plan défini par la paroi verticale (10) ; dans lequel la première partie (51) peut tourner autour de l'axe respectif (Y) de manière à déplacer le second rouleau (20') parallèlement audit plan défini par le plan vertical de la paroi (10) entre une position de fonctionnement, dans laquelle les deux rouleaux supérieurs de chaque paire de rouleaux (20, 20') sont alignés coaxialement l'un sur l'autre, et une position de non-fonctionnement, dans laquelle le bras (50) est tourné et les deux rouleaux de chaque paire de rouleaux (20, 20') sont désalignés.

15. Machine pour fabriquer des articles sanitaires, spécifiquement des articles absorbants tels que des couches, par exemple, comprenant une pluralité de moyens d'actionnement pour transférer et/ou traiter le matériau pour former et/ou fabriquer les articles sanitaires, au moins certains des moyens d'actionnement (20, 20') étant configurés par des rouleaux (20, 20') qui sont montés coaxialement les uns par rapport aux autres et/ou sur des axes parallèles (X) et supportés par une paroi sensiblement verticale (10) d'une base de support, chaque rouleau (20, 20') ayant un support central respectif (21, 21'), une enveloppe extérieure cylindrique (22, 22') et un compartiment interne (23, 23'), interposé entre le support central (21, 21') et l'enveloppe (22, 22'), dans lequel au moins un des rouleaux (20, 20') comprend un moteur électrique (24, 24') monté à l'intérieur du compartiment interne (23, 23') et configuré pour mettre l'enveloppe (22, 22') en rotation autour de l'axe respectif (X) ;
la machine étant configurée comme une machine à deux lignes et dans laquelle au moins une partie des moyens d'actionnement (20, 20') sont configurés par des paires de rouleaux (20, 20') dans laquelle les rouleaux (20, 20') de chaque paire sont montés axialement côte à côte le long de l'axe de rotation commun (X), dans laquelle un premier rouleau (20) de chaque paire de rouleaux est en porte-à-faux, de préférence directement, à la paroi verticale (10) et dans lequel le second rouleau (20') de la paire de rouleaux, disposé plus éloigné de la paroi verticale (10), est supporté par la paroi verticale (10) au moyen d'un bras de support (50) surmontant le premier rouleau (20) de la paire de rouleaux.

16. Machine pour fabriquer des récipients en matériau multicouche pour liquides ou poudres, en particulier des emballages en carton, des capsules ou similaires, comprenant une pluralité de moyens d'actionnement pour transférer et/ou traiter le matériau pour former et/ou fabriquer les récipients, au moins certains des moyens d'actionnement (20, 20') étant configurés par des rouleaux (20, 20') qui sont montés coaxialement les uns par rapport aux autres et/ou sur des axes parallèles (X) et supportés par une paroi sensiblement verticale (10) d'une base de support, chaque rouleau (20, 20') ayant un support central respectif (21, 21'), une enveloppe extérieure cylindrique (22, 22') et un compartiment interne (23, 23'), interposé entre le support central (21, 21') et l'enveloppe (22, 22'), dans lequel au moins un des rouleaux (20, 20') comprend un moteur électrique (24, 24') monté à l'intérieur du compartiment interne (23, 23') et configuré pour mettre l'enveloppe (22, 22') en rotation autour de l'axe respectif (X) ;
la machine étant configurée comme une machine à deux lignes et dans laquelle au moins une partie des moyens d'actionnement (20, 20') sont configurés par des paires de rouleaux (20, 20') dans laquelle les rouleaux (20, 20') de chaque paire sont montés axialement côte à côte le long de l'axe de rotation commun (X), dans laquelle un premier rouleau (20) de chaque paire de rouleaux est en porte-à-faux, de préférence directement, à la paroi verticale (10) et dans lequel le second rouleau (20') de la paire de rouleaux, disposé plus éloigné de la paroi verticale (10), est supporté par la paroi verticale (10) au moyen d'un bras de support (50) surmontant le premier rouleau (20) de la paire de rouleaux.

17. Machine pour emballer des produits alimentaires, spécifiquement des petits produits tels que des chocolats, des bonbons ou similaires, comprenant une pluralité de moyens d'actionnement pour transférer et/ou traiter le matériau pour constituer et/ou emballer les produits alimentaires, au moins certains des moyens d'actionnement (20, 20') étant configurés par des rouleaux (20, 20') qui sont montés coaxialement l'un par rapport à l'autre et/ou sur des axes parallèles (X) et supportés par une paroi sensiblement verticale (10) d'une base de support, chaque rouleau (20, 20') ayant un support central respectif (21, 21'), une enveloppe externe cylindrique (22, 22') et un compartiment interne (23, 23'), interposé entre le support central (21, 21') et l'enveloppe (22, 22'), dans lequel au moins un des rouleaux (20, 20') comprend un moteur électrique (24, 24') monté à l'intérieur du compartiment interne (23, 23') et configuré pour mettre l'enveloppe (22, 22') en rotation autour de l'axe respectif (X) ;
la machine étant configurée comme une machine à deux lignes et dans laquelle au moins une partie des moyens d'actionnement (20, 20') sont configurés par des paires de rouleaux (20, 20') dans laquelle les rouleaux (20, 20') de chaque paire sont montés axialement côte à côte le long de l'axe de rotation commun (X), dans laquelle un premier rouleau (20) de chaque paire de rouleaux est en porte-à-faux, de préférence directement, à la paroi verticale (10) et dans lequel le second rouleau (20') de la paire de rouleaux, disposé plus éloigné de la paroi verticale (10), est supporté par la paroi verticale (10) au moyen d'un bras de support (50) surmontant le premier rouleau (20) de la paire de rouleaux.
